## Europäisches Patentamt
## European Patent Office
## Office européen des brevets

(11) Numéro de publication: **0 207 840**
**B1**

# FASCICULE DE BREVET EUROPÉEN

(45) Date de publication du fascicule du brevet:
12.10.88

(51) Int. Cl.⁴: **B 60 K 15/02**

(21) Numéro de dépôt: 86401287.7

(22) Date de dépôt: 13.06.86

(54) Réservoirs de carburant en matière synthétique, notamment pour véhicules automobiles.

(30) Priorité: 25.06.85 FR 8509623

(43) Date de publication de la demande:
07.01.87 Bulletin 87/2

(45) Mention de la délivrance du brevet:
12.10.88 Bulletin 88/41

(84) Etats contractants désignés:
AT BE CH DE GB IT LI NL SE

(56) Documents cité:
DE-A-1 455 770
DE-A-2 456 525
FR-A-863 844
FR-A-1 471 394
US-A-2 953 156
US-A-3 822 028

(73) Titulaire: REGIE NATIONALE DES USINES RENAULT, Boîte postale 103 8-10 avenue Emile Zola, F-92109 Boulogne- Billancourt (FR)

(72) Inventeur: Mourette, André, 20, rue Paul Bourget, F-78370 Plaisir (FR)
Inventeur: Marie, Gilles, 8, boulevard Beaumarchais, F-78330 Fontenay Le Fleury (FR)

(74) Mandataire: Saint Martin, René, Régie Nationale des Usines Renault Direction des Recherches et Développements Service 0804 8-10, Avenue Emile- Zola, F-92109 Boulogne Billancourt Cedex (FR)

EP 0 207 840 B1

## Description

La présente invention se rapporte à une disposition particulièrement économique d'implantation de tubulures dans des réservoirs à carburant en matière synthétique soufflée.

Le positionnement correct des tuyaux d'alimentation du moteur et de retour du carburant dans de tels réservoirs pose un certain nombre de problèmes.

On peut faire passer ces conduits par l'orifice destiné à la jauge, ce qui implique de les rigidifier suffisamment afin de leur permettre de résister à la flexion résultant des mouvements du liquide; on obtient ce résultat en les faisant en acier.

Toutefois, les mêmes réservoirs soufflés pouvant être affectés de certaines variations de leur hauteur, du fait de dispersions importantes dans leur fabrication et de différences de serrage de leurs sangles de maintien, des tuyaux rigides en acier, plongeant verticalement, sont mal adaptés pour s'ajuster avec précision au fond du réservoir.

De ce fait, on est parfois appelé à utiliser des tuyaux d'aspiration pourvus de soufflets, permettant ainsi d'atteindre le fond du réservoir malgré les différences de hauteur existantes, et d'y prélever le liquide restant, même en faible quantité. Un tel système est relativement coûteux. Il en est de même pour la fabrication de réservoirs dont on précise et stabilise la hauteur en les pourvoyant d'entretoises complémentaires.

On pourrait également implanter les canalisations d'alimentation sous le réservoir par perçage du fond, mais les risques de détériorations sont importants et l'ensemble ne résisterait pas aux tests de sécurité, tels que l'épreuve du feu, auxquels ils sont soumis.

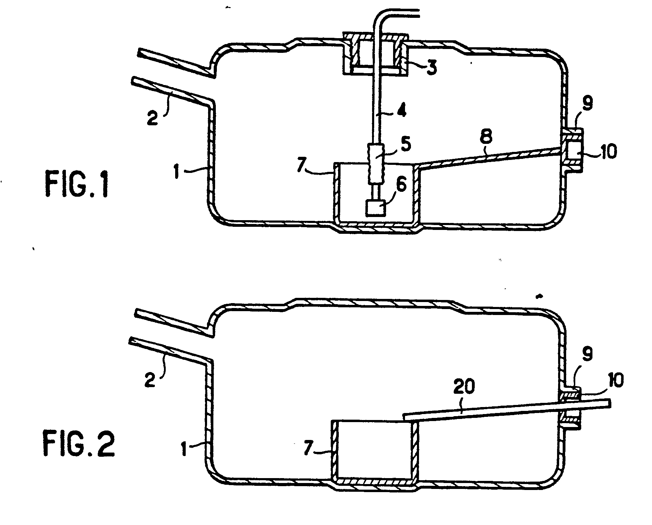

Le but de la présente invention qui sera maintenat décrite à titre d'exemple non limitatif au regard des figures 1 à 9 ci-jointes est de pallier ces difficultés, en profitant de l'implantation de certains autres éléments, pour positionner les conduits d'alimentation et de retour du carburant. Lesdites figures se rapportent respectivement

- la figure 1, à une vue en coupe longitudinale d'un réservoir selon l'état de la technique;
- la figure 2, à une vue analogue d'une première réalisation de l'invention;
- les figures 3 à 5, à des variantes de la figure 2;
- la figure 6, à une vue de dessus de la figure 5;
- la figure 7, à une vue en perspective de la figure précédente;
- les figures 8 et 9, à une vue en coupe longitudinale d'une seconde réalisation de l'invention, respectivement avant et après assemblage.

Le réservoir à carburant 1, selon l'état de la technique antérieure illustré à la figure 1, est pourvu d'une pipe de remplissage 2 et d'un orifice 3 pour le passage de la jauge qui est également utilisé pour l'introduction d'un tuyau 4 d'aspiration du carburant; ce dernier comporte un soufflet 5 lui permettant d'adapter sa longueur à la hauteur du réservoir, malgré les dispersions de dimensions évoquées plus haut; son extrémité inférieure 6 aboutit dans un bac 7 destiné à constituer une réserve anti-désamorçage; celui-ci, dans le cas des réservoirs en matière synthétique soufflée, est introduit dans la préforme, ou paraison, et y est maintenu au cours de l'opération de soufflage au moyen d'une tige 8, qui peut ultérieurement être retirée par découpage d'un orifice 9 et pose d'un bouchon 10.

La présente invention a pour but de profiter d'une opération existante ou de la présence d'un élément habituellement utilisé dans la constitution d'un réservoir en matière synthétique selon la technique antérieure, pour implanter de façon économique et précise les tuyaux d'alimentation et de retour du carburant.

Une première réalisation de cette idée est schématisée aux figures 2, 3, 6 et 7, où l'on retrouve le réservoir en matière synthétique 1 de la figure 1 et sa pipe de remplissage 2, ainsi que le piège à carburant 7 éventuellement soudé au fond du réservoir.

Toutefois, à la différence de la réalisation selon la figure 1, la tige de maintien 8 du piège 7 en position dans le réservoir 1 est remplacée par les canalisations 20 en matière synthétique rigide de retour du carburant et 21 d'alimentation du carburateur; celles-ci sont de préférences venues de moulage avec le piège 7 et le bouchon 10, ce qui permet leur maintien et un positionnment précis, en particulier de la canalisation 21, dont l'extrémité 30 peut être réalisée très près du fond 31, sans par conséquent nécessiter la présence d'un soufflet 5 d'ajustement (figure 1).

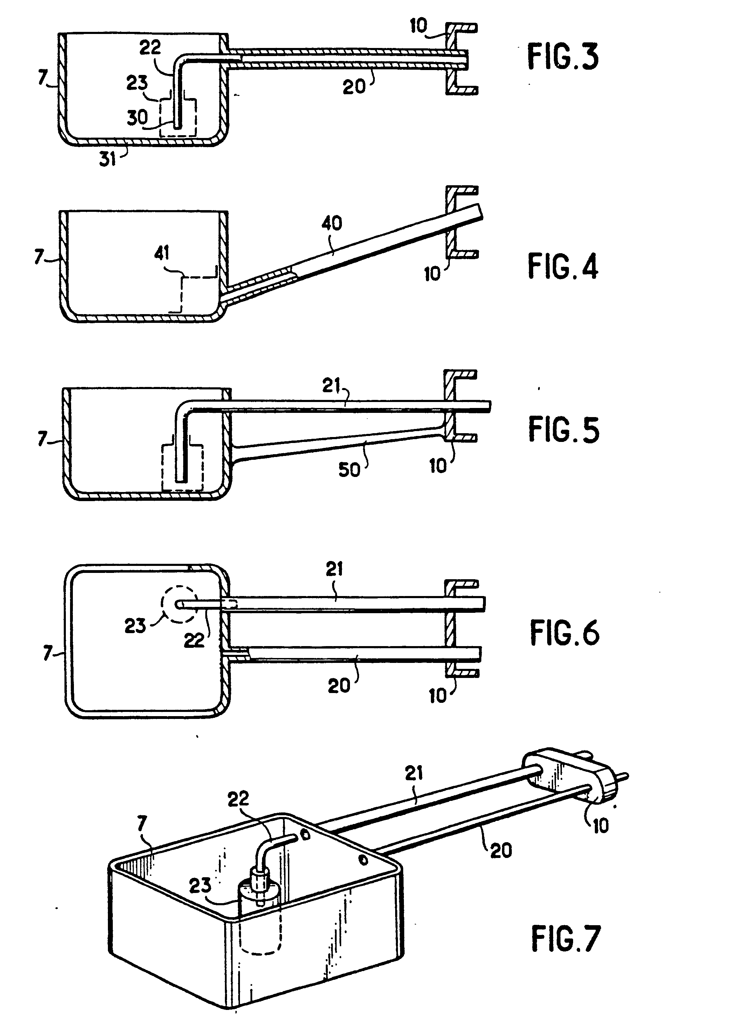

Dans le cas de la figure 3, les deux canalisation 20 - 21 arrivent en haut du bac 7, cette dernière 21 étant prolongée par un raccord vertical 22 comportant un filtre 23. On notera que sans coût supplémentaire par rapport à l'état de la technique, on obtient en une seule opération de moulage un dispositif présentant de bonnes fiabilité et qualité dimensionnelle donnant lieu en outre à la simplification de la jauge à carburant (selon la figure 1) qui perd ses fonctions d'alimentation et de retour; ceci permet donc une économie supplémentaire.

La variante selon la figure 4 diffère de la précédente en ce que les canalisations homologues à 20 - 21 sont disposées en oblique et débouchent à la partie inférieure du bac 7; on voit que dans ce cas, le conduit d'alimentation 40 ne nécessite aucun raccord supplémentaire tel que 22 de la représentation précédente; un filtre 41 est disposé à l'intérieur de la réserve 7, mais peut être rejeté à l'extérieur afin d'en faciliter son acces.

La réalisation de la figure 5 ne diffère que par la présence complémentaire d'au moins une tige de support 50 venues de préférence de moulage simultanément avec le bac 7 et le bouchon 10, remplaçant ainsi l'action de maintien de ces deux éléments exclusivement assurée, dans le cas de la figure 3, par les conduits 20 - 21.

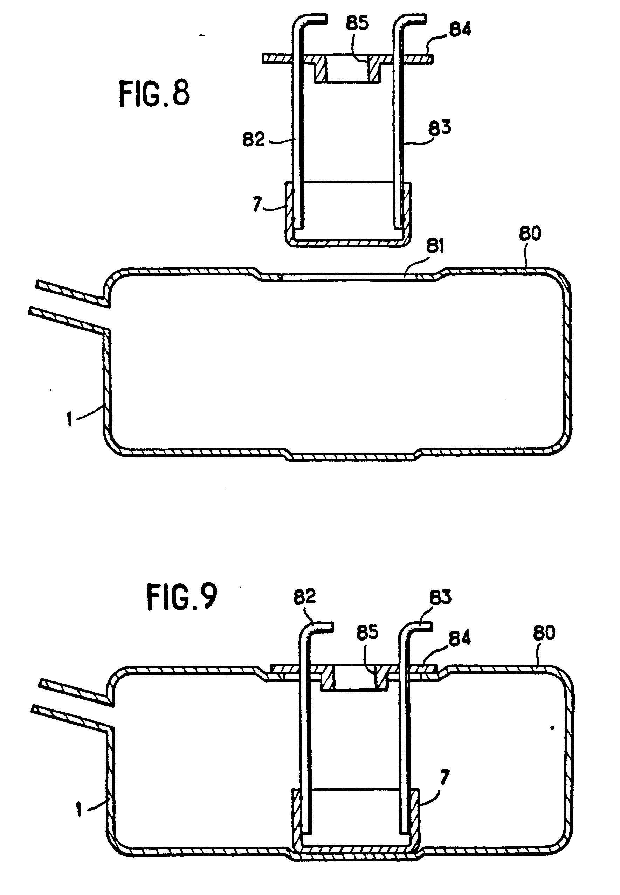

En ce qui concerne les figures 8 et 9, le réservoir 1 comporte à sa face supérieure 80 un passage 81 pour l'introduction de la réserve 7. Celle-ci est pourvue de deux conduits 82 - 83 d'alimentation et de retour du carburant, qui lui sont solidarisés ainsi qu'à la cloison supérieure 84 destinée à être ultérieurement soudée au réservoir pour fermer l'ouverture 81; ce dernier peut en outre recevoir une fixation de jaune 85. L'ensemble ainsi constitué, après soudure du bac 7 sur le fond du réservoir 1, entretoise ce dernier, stabilisant ainsi sa hauteur et son volume, sans faire appel à d'autres moyens complémentaires.

La jauge, dans ces conditions, peut donner des indications plus précises que dans les réalisations antérieures.

## Revendications

1. Réservoir de carburant en matière synthétique comportant un bac de réserve (7) anti-désamorçage et des canalisations d'alimentation (21) du carburateur et de retour (20), caractérisé en ce que le maintien en position du bac (7) dans le réservoir (1) est assuré par les canalisations (20 - 21), de préférence venues de moulage avec le bac (7) et le bouchon (10) ajustant de façon étanche la sortie desdites canalisations et la paroi du réservoir (1) hors duquel elles se prolongent.

2. Réservoir selon la revendication 1, caractérisé en ce que les canalisations (20 - 21) débouchent à la partie supérieure du bac (7), la canalisation (21) étant prolongée par un raccord vertical (22) jusqu'au fond du bac (7) au niveau duquel elle s'achève par un filtre (23).

3. Réservoir selon la revendication 1, caractérisé en ce que les canalisations (20 - 21) débouchent à la partie inférieure du bac (7).

4. Réservoir selon la revendication 1, caractérisé en ce que le bac (7) et le bouchon (10) sont réunis par au moins une tige complémentaire de support (50), venue de préférence par moulage avec les éléments précédents.

5. Réservoir selon la revendication 1, caractérisé en ce que le bac (7), les canalisations d'alimentation et de retour (82 - 83) et une cloison supérieure (84) constituent un ensemble rigide, venu de préférence simultanément de moulage, qui est introduit par une ouverture (81) ménagée dans la face supérieure (80) du réservoir, sur laquelle la cloison (84) est ultérieurement soudée, stabilisant ainsi la hauteur du réservoir (1).

## Patentansprüche

1. Kraftstofftank aus Kunststoff, mit einem Reservebehälter (7) gegen völliges Entleeren, sowie mit einer Zufuhrleitung (21) zum und einer Rücklaufleitung (20) vom Vergaser, dadurch gekennzeichnet, daß die Halterung des Behälters (7) im Tank (1) durch die Leitungen (20 - 21) gewärleistet wird, die vorzugsweise zusammen mit dem Behälter (7) gegossen werden, sowie durch einen Stopfen (10), der in dichter Weise die Enden der Leitungen mit der Wand des Tanks (1) verbindet durch die hindurch sie sich erstrecken.

2. Tank nach Anspruch 1, dadurch gekennzeichnet, das die Leitungen (20 - 21) im oberen Teil des Behälters (7) münden und daß die Leitung (21) durch ein senkrechtes Verbindungsstück (22) bis in die Nähe des Bodens des Behälters (7) verlängert ist, wo sie in einem Filter (23) endet.

3. Tank nach Anspruch 1, dadurch gekennzeichnet, daß die Leitungen (20 - 21) im unteren Teil des Behälters (7) münden.

4. Tank nach Anspruch 1, dadurch gekennzeichnet, daß der Behälter (7) und der Stopfen (10) durch wenigstens einen zusätzlichen Haltestab (50) miteinander verbunden sind, der zusammen mit den vorgenannten Teilen gegossen wird.

5. Tank nach Anspruch 1, dadurch gekennzeichnet, daß der Behälter (7), die Zufuhrleitung und die Rücklaufleitung (82 - 83) sowie eine obere Abschlußwand (84) eine steife Einheit bilden, die zusammen gegossen wird und durch eine in die Oberfläche (80) des Tanks eingelassene Öffnung (81) eingesetzt ist, auf die schließlich die Abschlußwand (84) geschweißt wird, um so die Höhe des Tanks (1) zu stabilisieren.

## Claims

1. A fuel tank of synthetic material comprising an anti-unpriming reserve container (7) and carburettor feed and return conduits (21 and 20 respectively) characterised in that the container (7) is held in position in the tank (1) by the conduits (20, 21) which are preferably moulded with the container (7) and the plug (10) sealingly fitting the outlet of said conduits and the wall of the tank (1) out of which they are extended.

2. A tank according to claim 1 characterised in that the conduits (20, 21) issue in the upper part of the container (7), the conduit (21) being extended by a vertical connection (22) to the bottom of the container (7) at the level of which it terminates with a filter (23).

3. A tank according to claim 1 characterised in that the conduits (20, 21) open in the lower part of the container (7).

4. A tank according to claim 1 characterised int that the container (7) and the plug (10) are connected together by at least one additional support bar (50) which is preferably moulded with the foregoing components.

5. A tank according to claim 1 characterised in that the container (7), the feed and return conduits (82, 83) and an upper partitioning member (84) form a rigid assembly which is preferably moulded simultaneously and which is introduced by way of an opening (81) provided in the upper face (80) of the tank, over which the partitioning member (84) is subsequently welded, thus stabilising the height of the tank (1).

FIG.1

FIG.2

**FIG.3**

**FIG.4**

**FIG.5**

**FIG.6**

**FIG.7**

FIG.8

85

84

82

83

7

81

80

1

FIG.9

82

83

85

84

80

7

1